# EUROPEAN PATENT SPECIFICATION

(11) **EP 4 101 288 B1**
(45) Date of publication and mention of the grant of the patent: **21.08.2024**
(21) Application number: 22174180.4
(22) Date of filing: 18.05.2022
(51) Int. Cl.: A01F 15/00

(54) **SYSTEMS AND METHODS FOR GEOLOCATING AND MAPPING ASH CONTAMINATION IN HAY PRODUCTION**
SYSTEME UND VERFAHREN ZUM GEOLOKALISIEREN UND KARTIEREN DER ASCHEKONTAMINATION IN DER HEUPRODUKTION
SYSTÈMES ET PROCÉDÉS DE GÉOLOCALISATION ET DE CARTOGRAPHIE DE LA CONTAMINATION PAR LES CENDRES DANS LA PRODUCTION DE FOIN

(30) Priority: 07.06.2021 US 202163197840 P
(43) Date of publication of application: 14.12.2022
(73) Proprietor: AGCO Corporation, Duluth, GA 30096 (US)
(72) Inventor: WIRE, Jason, Hesston, 67062 (US); GOOD, Grant Lewis, Hesston, 67062 (US); WILLIAMSON, Jessica, Hesston, 67062 (US)
(74) Representative: AGCO Intellectual Property Department

(56) References cited:
- EP-A1- 3 827 662
- DE-A1- 102017 104 008
- DE-A1- 19 922 867
- US-A1- 2021 015 032
- US-B1- 7 877 970

## Description

### FIELD OF THE DISCLOSURE

The present invention relates to systems and methods for geolocating and mapping ash contamination in a crop, and more particularly, embodiments concern a system and computer-implemented method for sensing ash in a cut crop material being processed by an agricultural implement and responsively correlating the ash information with a geographical location based on geolocation data.

### BACKGROUND

Producers of certain crops, such as hay, desire to maximize the quality of their crops, particularly with regard to reducing the amount of ash contained therein. Ash is primarily a concern in crops that are cut (e.g., mowed) and windrowed or swathed such as hay. Some part of the total amount of ash is inherent, but an external part is added during the harvesting process. External ash may include undesirable soil contamination that can accumulate in hay during raking and/or baling. It provides no nutritional value to livestock and adds unnecessary weight to purchased hay, which increases cost. Excessive ash content may reduce milk and meat production, lead to sand colic in horses, and reduce the amount of nutrients an animal can absorb.

Historically, an amount of ash added during the harvesting process has been unknown. Operators of harvesting equipment generally perform a subjective qualitative assessment of an amount of ash that could collect on the crop during harvesting. Bales may then contain an amount of ash that is significantly more than the subjective assessment.

Systems for assessing the ash content of cut crop having the precharacterisng features of claim 1 are known from DE 199 22 867 A1 (Deere) and DE 10 2017 104008 A1 (CLAAS).

### SUMMARY

This summary is provided to introduce a selection of concepts in a simplified form that are further described in the detailed description below. This summary is not intended to identify key features or essential features of the claimed subject matter, nor is it intended to be used to limit the scope of the claimed subject matter. Other aspects and advantages of the present disclosure will be apparent from the following detailed description of the embodiments and the accompanying drawing figures.

In one aspect, a system is provided. The system includes an agricultural implement including a crop processing portion. The crop processing portion is configured to move a cut organic material in a field. The system also includes an ash assessment system having a GNSS receiver configured to determine geolocation data corresponding to a geographical location of the GNSS receiver. The ash assessment system also includes an ash sensor configured to determine a measured ash contamination value indicative of an amount of ash particles associated with the cut organic material. Moreover, the ash assessment system includes a processor operatively coupled to the GNSS receiver and the ash sensor. The processor is programmed to receive the measured ash contamination value from the ash sensor and receive the geolocation data from the GNSS receiver. The geolocation data corresponds to a geolocation of the measured ash contamination value. The processor is also programmed to correlate the measured ash contamination value and the geolocation data to one another and store the measured ash contamination value and the geolocation data in a memory device that is coupled in communication with said processor. Said ash sensor comprises an optical particle counter configured to detect an amount and size of particulate matter in the air.

In another aspect, an ash assessment method is provided. The ash assessment method includes moving a cut organic material lying in a field with a crop processing portion of an agricultural implement. The method also includes determining a measured ash contamination value indicative of an amount of ash particles associated with the cut organic material and determining geolocation data corresponding to a geographical location of the agricultural implement. Furthermore, the method includes receiving a measured ash contamination value from an ash sensor coupled to the agricultural implement and receiving the geolocation data from a GNSS receiver coupled to the agricultural implement. The geolocation data corresponds to a geolocation of the measured ash contamination value. Moreover, the method includes correlating the measured ash contamination value and the geolocation data to one another and storing the measured ash contamination value and the geolocation data in a memory device that is coupled in communication with said processor. Said ash sensor comprises an optical particle counter configured to detect an amount and size of particulate matter in the air.

Advantages of these and other embodiments will become more apparent to those skilled in the art from the following description of the exemplary embodiments which have been shown and described by way of illustration. As will be realized, the present embodiments described herein may be capable of other and different embodiments, and their details are capable of modification in various respects. Accordingly, the drawings and description are to be regarded as illustrative in nature and not as restrictive.

### BRIEF DESCRIPTION OF THE DRAWINGS

The Figures described below depict various aspects of systems and methods disclosed therein. It should be understood that each figure depicts an embodiment of a particular aspect of the disclosed systems and methods, and that each of the figures is intended to accord with a possible embodiment thereof. Further, wherever possible, the following description refers to the reference numerals included in the following figures, in which features depicted in multiple figures are designated with consistent reference numerals.
FIG. 1 is a schematic side view of a tow vehicle coupled to an agricultural implement, in accordance with one aspect of the present invention;
FIG. 2 is an example data table or spreadsheet, including bale parameters and a bale ID number generated by the agricultural implement of FIG. 1;
FIG. 3 is a perspective view of an example mower conditioner incorporating an ash assessment system of FIG. 1, in accordance with another aspect of the present invention;
FIG. 4 is an example data table or spreadsheet, including geolocation data and corresponding ash content data generated by the mower conditioner of FIG. 3; and
FIG. 5 is a flowchart illustrating an exemplary computer-implemented method for assessing an amount of ash using the ash assessment system shown in FIG. 1.

Unless otherwise indicated, the drawings provided herein are meant to illustrate features of embodiments of this disclosure. These features are believed to be applicable in a wide variety of systems comprising one or more embodiments of this disclosure. As such, the drawings are not meant to include all conventional features known by those of ordinary skill in the art to be required for the practice of the embodiments disclosed herein.

### DETAILED DESCRIPTION

The following detailed description of embodiments of the disclosure references the accompanying figures. The embodiments are intended to describe aspects of the disclosure in sufficient detail to enable those with ordinary skill in the art to practice the disclosure. The embodiments of the disclosure are illustrated by way of example and not by way of limitation. Other embodiments may be utilized, and changes may be made without departing from the scope of the claims. The following description is, therefore, not limiting. The scope of the present disclosure is defined only by the appended claims.

In this description, references to "one embodiment," "an embodiment," or "embodiments" mean that the feature or features being referred to are included in at least one embodiment of the technology. Separate references to "one embodiment," "an embodiment," or "embodiments" in this description do not necessarily refer to the same embodiment and are also not mutually exclusive unless so stated and/or except as will be clear to those skilled in the art from the description. For example, a feature, structure, act, etc. described in one embodiment may also be included in other embodiments but is not necessarily included. Thus, the present technology can include a variety of combinations and/or integrations of the embodiments described herein.

In the following specification and the claims, reference will be made to several terms, which shall be defined to have the following meanings. The singular forms "a," "an," and "the" include plural references unless the context clearly dictates otherwise. "Optional" or "optionally" means that the subsequently described event or circumstance may or may not occur, and that the description includes instances where the event occurs and instances where it does not.

Approximating language, as used herein throughout the specification and the claims, may be applied to modify any quantitative representation that could permissibly vary without resulting in a change in the basic function to which it is related. Accordingly, a value modified by a term or terms, such as "about," "approximately," and "substantially" are not to be limited to the precise value specified. In at least some instances, the approximating language may correspond to the precision of an instrument for measuring the value. Here and throughout the specification and claims, range limitations may be combined and/or interchanged, such ranges are identified and include all the sub-ranges contained therein unless context or language indicates otherwise.

As used herein, directional references, such as, "top," "bottom," "front," "back," "side," and similar terms are used herein solely for convenience and should be understood only in relation to each other. For example, a component might in practice be oriented such that faces referred to herein as "top" and "bottom" are in practice sideways, angled, inverted, etc. relative to the chosen frame of reference.

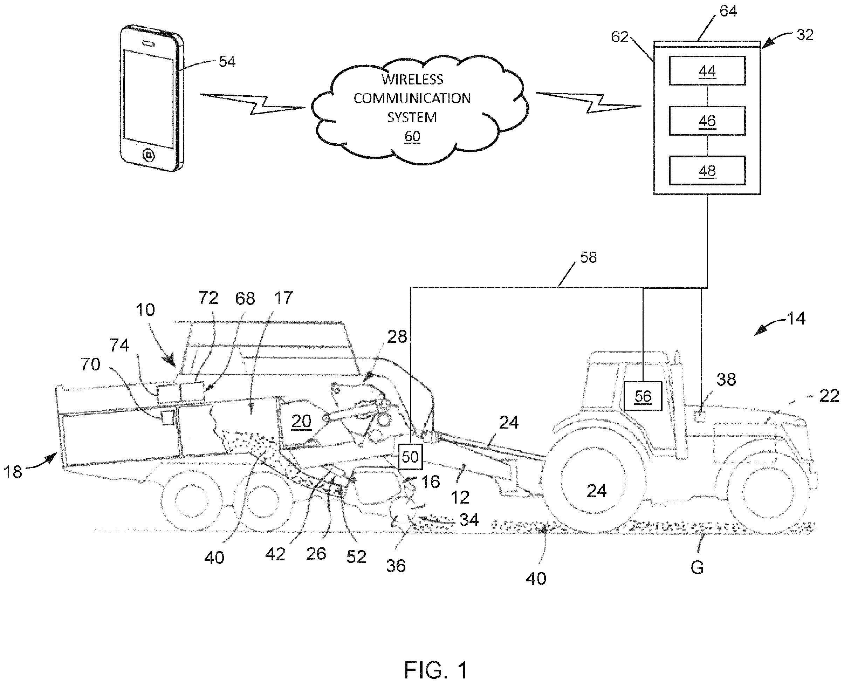

FIG. 1 is a schematic side view of an agricultural baler system, including a tractor 14 (broadly, a tow vehicle) coupled to a baler 10 (broadly, an agricultural implement), in accordance with one aspect of the present invention. In the example embodiment, the baler 10 is depicted as a large rectangular baler, for example, of the type manufactured and sold by AGCO Corporation of Duluth, Georgia under the HESSTON and MASSEY- FERGUSON brand names. It is noted, however, that the baler 10 may include any type of baler, including, for example, a large round baler, a small round baler, a small rectangular baler, and the like.

In the example embodiment, the baler 10 includes a wheeled chassis having a forwardly projecting tongue 12 that adapts the baler 10 to be hitched to the tractor 14 for traversing a field having windrowed crop materials 40 (broadly, cut organic material) lying thereon. A pickup 16 lifts the windrowed crop materials 40 off the ground as the baler 10 advances and, in cooperation with other mechanisms (not shown) of the baler 10, delivers the crop materials 40 in successive charges to a packaging apparatus 28 located within the baler 10 where the crop materials 40 are baled into bales 30. The baler 10 has a fore-and-aft extending baling chamber 17 within which the bales 30 of crop material 40 are formed. In the example embodiment, the baler 10 is depicted as an "in-line" type of baler wherein the crop material 40 is picked up from below and ahead of the baling chamber 17 and then loaded up into the bottom of the baling chamber 17 in a straight line path of travel. Alternatively, any type of baler that enables the agricultural baler system 8 to function as described herein may be used.

The pickup 16 is hingedly coupled to the wheeled chassis and can be raised or lowered with respect to the ground surface G via a lift mechanism 26 (e.g., a hydraulic cylinder). The lift mechanism 26 is operable to raise and lower at least the pickup 16 to a desired height during operation, and to raise and lower the entire pickup 16 to, respectively, a non-operational transport height and an operational height. The lift mechanism 26 may employ substantially any suitable lifting technology, such as a hydraulic mechanism or a mechanical mechanism. In one implementation, the lift mechanism 26 may include at least one lift cylinder 42 and at least one hydraulic lift circuit 52 configured to control the movement of hydraulic fluid to and from the lift cylinder 42 to, respectively, raise and lower the pickup 16.

The packaging apparatus 28 is configured for forming the crop materials 40 into the large rectangular bales 30. The baler 10 ejects the bales 30 from an open, but constricted, rear end 18 of the baler 10. Among other things, the packaging apparatus 28 includes a reciprocating plunger 20 that operates within the baling chamber 17 to compact the successively introduced charges of crop materials 40 rearwardly against previously compacted crop materials to build the bales 30. The completed bales 30 are tied with a binding material or a similar twine (not shown). Once tied, the bales 30 are discharged from the open rear end 18 the baler 10.

An engine 22 of the tractor 14 provides power to the baler 10, and more specifically, to the plunger 20, the lift mechanism 26, and the packing apparatus 28. In particular, the engine 22 of the tractor 14 provides power to the baler 10 via a power take off (PTO) shaft 24.

In the exemplary embodiment, the pickup 16 of the baler 10 has a standard resilient rotary rake 34 (broadly, a crop processing portion) for picking the crop material 40 up off of the ground G. In particular, the rotary rake 34 engages the crop materials 40 in a windrow. The rotary rake 34 includes a plurality of spinning tines 36 that contact the crop materials 40 as the baler 10 is towed forward and flings the crop materials 40 upwards and rearwards toward the baling chamber 17 of the baler 10. The pickup 16 may further include a rotor portion (not shown) that is configured to stuff the crop materials 40 into the packaging apparatus 28. In some embodiments, the pickup 16 may include one or more augers (not shown) operably coupled to the rotor portion and sandwiching a plurality of stuffers (not shown) provided upstream. When the crop materials 40 leave the rotary rake 34, the rotor portion (via the augers and stuffers) function to center and pack the crop materials 40 into the packaging apparatus 28.

In the example embodiment, the agricultural baler system includes an ash assessment system 32. The ash assessment system 32 receives the input signals, processes the information, and outputs appropriate commands and/or data for geolocating and mapping ash content (or contamination) of the crop materials 40, as described in detail below. As used herein, the term "ash" refers to undesirable soil contamination that can accumulate in or on crop materials during raking, baling, etc. Ash provides no nutritional value to livestock and adds unnecessary weight to the baled crop materials, which increases cost.

At least a portion of the ash assessment system 32 is coupled to the pickup and is configured to detect an amount of ash in the cut crop materials 40. While depicted as being attached to the pickup 16, it is contemplated that the ash assessment system 32 may be coupled to any suitable piece of agricultural equipment, as is described further herein. In a preferred embodiment, the ash assessment system 32 includes a transceiver 44 (or an electronic communication device), a memory device 46, a processor 48, one or more GNSS (Global Navigation Satellite System) receivers 38, one or more airborne ash sensors 50, and a bale tagging system 68.

The processor 48 includes one or more processing units (e.g., in a multicore configuration) specially programmed for executing computer readable instructions. The instructions may be executed within a variety of different operating systems (OS) installed or running on the ash assessment system 32, such as UNIX, LINUX, Microsoft Windows^{®}, proprietary systems, etc. More specifically, the computer readable instructions may cause various data manipulations on data stored in the memory device 46 (e.g., create, read, update, and delete procedures). It should also be appreciated that upon initiation of a computer-based method, various instructions may be executed during initialization. Some operations may be required to perform one or more processes described herein, while other operations may be more general and/or specific to a programming language (e.g., C, C#, C++, Java, or other suitable programming languages, etc.). The memory device 46 is any device allowing information such as the executable instructions and/or written works to be stored and retrieved. The memory device 46 includes one or more computer readable media.

In the example embodiment, the processor 48 may be implemented as one or more cryptographic processors. A cryptographic processor may include, for example, dedicated circuitry and hardware such as one or more cryptographic arithmetic logic units (not shown) that are optimized to perform computationally intensive cryptographic functions. A cryptographic processor may be a dedicated microprocessor for conducting cryptographic operations, embedded in a packaging with multiple physical security measures, which facilitate providing a degree of tamper resistance. A cryptographic processor facilitates providing a tamper-proof boot and/or operating environment, and persistent and volatile storage encryption to facilitate secure, encrypted transactions.

Because the ash assessment system 32 may be widely deployed, it may be impractical to manually update software for each ash assessment system 32. Therefore, a remote updating mechanism or service may be used to automatically update any number of components and their drivers, both network and non-network components, including system level (OS) software components. In some embodiments, the ash assessment system 32 components are dynamically loadable and unloadable; thus, they may be replaced in operation without having to reboot the OS.

The processor 48 may be configured to receive and analyze data and automatically act and/or communicate based on the results. In particular, in one embodiment, the processor 48 is configured to receive data from the GNSS receiver 38 and airborne ash sensors 50, analyze the data, and/or transmit data and or control signals to facilitate geolocating and mapping ash contamination of the crop materials 40, and/or communicate the results via one or more display devices 54 and 56 for consideration by an operator of the baler 10 and tractor 14. Many agricultural vehicles, such as the tractor 14, utilize a GNSS receiver for determining the position of the vehicle, navigation, position recording, and/or guidance and vehicle control.

In one embodiment, the transceiver 44 in configured to transmit radio signals. For example, the transceiver 44 may include a tuned circuit configured to transmit radio signals in any radio-based communication system including, but not limited to, Wireless Wide Area Network (WWAN), Wireless Local Area Network (WLAN), and Wireless Personal Area Network (WPAN) systems. In particular, the transceiver 44 is configured to transmit and receive signals between, for example, the memory device 46, the processor 48, the GNSS receiver 38, and the airborne ash sensor 50. More broadly, the transceiver 44 facilitates communications between various data sources and various interface devices, such as a mobile communications device 54 and/or a fixed display 56 located on the baler 10 and/or the tractor 14. The transceiver 44 may employ any suitable electronic communications technology, including one or more transceivers (e.g., WWAN, WLAN, and/or WPAN transceivers) functioning in accordance with IEEE standards, 3GPP standards, and/or other standards, and configured to receive and transmit signals. The transceiver 44 may employ a wired (e.g., a data bus) communication system 58 and/or a wireless (e.g., a network) communications system 60. The wireless communications system 60 may employ any suitable network standard or technology, such as GSM, CDMA, TDMA, WCDMA, LTE, EDGE, OFDM, GPRS, EV-DO, UWB, WiFi, IEEE 802 including Ethernet, WiMAX, and/or others, and may include or support various local area networks (LANs), personal area networks (PANs), or short-range communications protocols.

The memory device 46 is configured to store data for access and use by, for example, the processor 48. In an example embodiment, the memory device 46 stores a plurality of airborne ash contamination values and associated geolocation values. The memory device 46 employs any suitable electronic memory technology, such as one or more forms of volatile and/or non-volatile, fixed and/or removable memory, such as read-only memory (ROM), electronic programmable read-only memory (EPROM), random access memory (RAM), erasable electronic programmable read-only memory (EEPROM), and/or other memory devices, such as hard drives, flash memory, MicroSD cards, and the like.

In one example embodiment, the ash assessment system 32 may include a housing 62 at least partly (and more preferably, at least substantially or entirely) enclosing the transceiver 44, the memory device 46, and the processor 48 (broadly, the controller components) described above. The housing 62 may be configured to seal the controller components and corresponding circuitry, which are susceptible to degradation from the ambient environment. In an embodiment, the controller components may be hermetically sealed in the housing 62. For example, in one embodiment, the controller components are completely and permanently encased within the housing 62. In other words, the housing 62 and the controller components are intended to remain as a single, inseparable unit throughout the life of the ash assessment system 32. It is understood that the housing 62 can be formed separately from the controller components and that the controller components can be placed into and sealed within the housing 62 in a separate operation. It is also understood that the housing 62 can be oversized with respect to the controller components so that the controller components can be placed loosely into the housing 62. In another embodiment, the controller components can be selectively, sealingly enclosed within the housing 62, where the housing 62 includes a closure 64 removably attached to a body of the housing 62.

The housing 62 may fabricated from a suitably selected material that facilitates inhibiting the effect the material has on signals being emitted from, for example, the transceiver 44 and passing through the housing material. For example, and without limitation, suitable materials from which the housing 62 may be fabricated include polyethylene, propylene, isoprene, and butylenes (i.e., polyolefins). In other embodiments, the housing 62 is fabricated from any material that enables the ash assessment system 32 to function as described herein, such as metals, etc.

In some embodiments, the ash assessment system 32 may be connected to one or more peripheral devices (not shown). That is, the ash assessment system 32 may communicate various data with one or more peripheral devices. For example, the ash assessment system 32 may communicate with one or more peripheral devices through the transceiver 44 or other suitable means.

In an example embodiment, the one or more airborne ash sensors 50 may be configured to measure an amount of airborne ash proximate the crop material 40, which may be indicative of an amount of ash collecting on the crop material. In particular, the airborne ash sensors 50 detect particulate matter in the air, including detecting an approximate amount and size of the particles. Further, the airborne ash sensors 50 communicate this data to the memory device 46 and/or the processor 48 via the transceiver 44. The one or more sensors 50 may be located proximate to an entrance of the pickup 16, and/or proximate the entrance to the rotor portion, or otherwise exposed to the cut crop material 40 within the pickup 16. The airborne ash sensors 50 employ optical particle counters, including, for example, photometers, light scattering airborne particle counters, light blocking (obscuration) airborne particle counters, direct imaging counters, and the like. In a preferrable embodiment, the airborne ash sensors 50 include a laser induced fluorescence particle counter that may differentiate between inorganic and organic particles In an example not falling under the scope of the claims, the airborne ash sensors 50 may employ substantially any suitable technology that enables the sensors to function as described herein, including near infrared spectrometer, infrared thermal, x-ray, or capacitance.

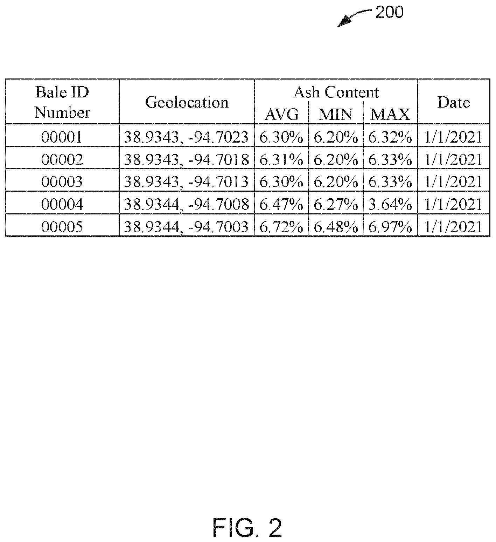

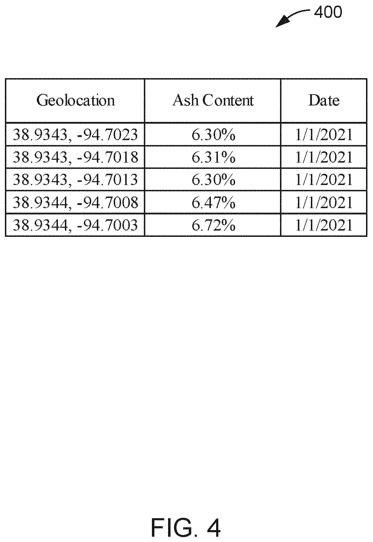

Furthermore, in the exemplary embodiment, location data of the tractor 14 and/or the baler 10-more particularly, geolocation information regarding the geographical (latitudinal and longitudinal) location of the tractor 14 and/or baler 10-may be provided to the ash assessment system 32 and/or the tractor 14 (or an operator of the tractor 14) in real-time. This may aid the operator, the tractor 14, and/or the ash assessment system 32 in making various operational parameter adjustments (e.g., pickup height, tractor speed, rotor speeds, etc.) or other decisions when baling the crop materials 40 or otherwise processing a crop (e.g., raking). For example, the real-time data may be provided to the operator or another party for real-time monitoring of an amount of airborne ash proximate the crop materials 40 and an associated location. Thus, an amount of airborne ash can be provided to the tractor 14 and/or to the operator (via the via one or more display devices 54 and 56) and necessary adjustments to various operating parameters can be made to reduce airborne ash, which can collect on the crop materials 40. The airborne ash and location data collected or recorded may be stored in the memory device 46, for example, in a data table, spreadsheet, or other organized data format (see FIGS. 2 and 4) so that it may be retrieved at a later time. For example, a user of a computing device 66 may access the data wirelessly via the wireless communication system 60 (e.g., via Wi-Fi, cloud-based technology, or any other known communication means) by accessing the memory device 46 (or database) where the information is stored. The location data may include generally continuous data (e.g., data samples recorded or taken over a sufficiently small, predetermined time or distance interval) if associated with the cut crop materials 40 only, or a discrete location if associated with the drop of a bale 30 on the ground G.

In the exemplary embodiment, the bale tagging system 68 may implement, for example, electromagnetic fields for assigning ash content (or contamination) values (broadly, bale parameters) associated with the bale 30 to a bale identification (ID) tag 70. The bale ID tag 70 may be applied to the bale 30 during and/or after formation. In a preferred embodiment, the bale ID tag 70 has a unique identifier and is a passive radiofrequency identification (RFID) tag used to electronically store information and collect energy from a nearby RFID reader's interrogating radio waves. As RFID tags are known to those skilled in the art, a detailed description of the RFID tag need not be provided herein. In embodiments of the present invention, the binding material is provided with the bale ID tags 70. The bale ID tags 70 are placed in the binding material at certain predetermined intervals. While the bale ID tags are described herein as being RFID tags, in other embodiments, the bale ID tags may include any type of tag that enables the ash assessment system 32 to function as described herein. For example, and without limitation, the bale ID tags may include printed tags (i.e., tags with printed data, such as serial numbers, ash content, etc.), machine-readable codes (e.g., 2D bar codes, QR codes, etc.), and the like. In some embodiments, the bale ID tag 70 includes a unique identifier associated only to that bale ID tag that is readable by a tag reader, but the tag reader cannot write data or other information to the bale ID tag.

The bale tagging system 68 includes a tag reading module 72 and a tag writing module 74 (the reading and writing modules may include one or more antennas, such as an Active Reader Passive Tag (ARPT) system), which transmit interrogator signals and also receive replies from the bale ID tags 70. As a bale 30 passes along the baling chamber 17, the tag reading module 72 may read the bale ID tag 70 to acquire the tag's unique identifier. In addition, in certain embodiments the tag writing module 74 may write the bale parameters (determined by the sensors 38 and 50 to be associated with the respective bale) to the bale ID tag. Alternatively, in one embodiment, instead of trying to write the bale parameters to the bale ID tag 70, the bale ID tag 70 may be assigned to a given bale 30.

In the exemplary embodiment, as described above, when each bale 30 is formed, the tag reading module 72 may read the unique identifier from the bale ID tag 70 corresponding to the respective bale 30. The processor 48 may designate the unique identifier as a bale ID number of the respective bale, for example, in a data table stored in the memory device 46. The bale ID number is a unique number with respect to the other bales being formed. In the exemplary embodiment, as the bale is formed and processor associated a unique identifier to the bale, the GNSS receiver 38 and airborne ash sensors 50 may communicate measurements and other detected data detected to the processor 48. The processor 48 may associate the measurements and other detected data with the bale ID number (i.e., the unique identifier of the bale ID tag). Alternatively, or in addition, the processor 48 may communicate the data from the GNSS receiver 38 and airborne ash sensors 50, and the bale ID number (i.e., the bale tag unique identifier) to the memory device 46 or database, for example, as a data table. The bale parameters and bale ID number may then be later written or uploaded to a data management system such as a Farm Management Information System (FMIS) or other suitable program, or else transmitted wirelessly by the wireless communication system 60 to the data management or similar system, for ex ample as a data table (see FIGS. 2 and 4). The data management or similar system may be installed and executable on the computing device 66 or similar computer system (not shown).

FIG. 2 is an example data table 200 or spreadsheet, including the bale parameters and bale ID number described above. In the exemplary embodiment, the data table 200 may include a plurality of columns and rows defining a plurality of cells. Each cell may include data or parameters associated with a plurality of bales 30. As depicted in FIG. 2, the plurality of columns may include, for example, the following data: the bale ID number, a geolocation of the bale, the ash content of the bale (such as an average, minimum, and maximum amount by percentage), and a date baled. It is noted, however, that the data table 200 may include any number of columns and rows in the data table 200 based on the number of bales formed and any other relevant bale parameters.

The data contained in the data table 200 can then be displayed in multiple ways. For example, either through the data management system, such as a Geographic Information System (GIS) map, for future decision making, or as a text file type display. Either would be available to either export or display on other controller equipped agricultural machines, such as bale handling and loading equipment (not shown), to record or display all attributes of bales being fed or sold.

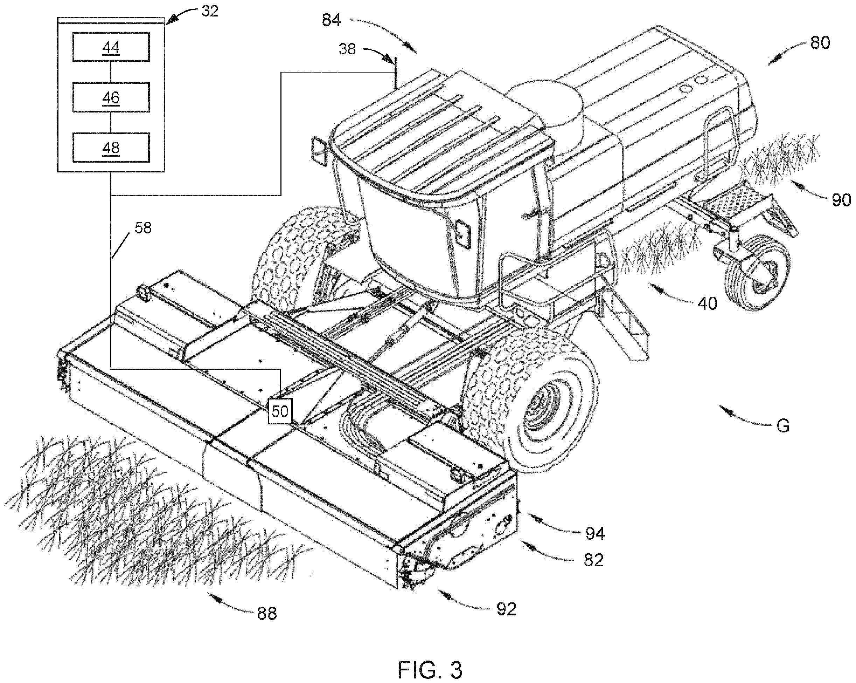

FIG. 3 is a perspective view of an example mower conditioner 80 (also referred to as a swather or windrower) incorporating an embodiment of the ash assessment system 32, in accordance with another aspect of the present invention. While depicted in this embodiment as a mower conditioner, it is contemplated that the ash assessment system 32 may be coupled to any type of agricultural implement, including for example, a hay rake. Hay rakes may include, for example, rotary rakes, wheel rakes, parallel-bar rakes, belt rakes, and the like. Further, as described above, the ash assessment system 32 is equally applicable to other agricultural tools, and in in particular, to hay production tools.

The mower conditioner 80 may broadly include a header 82. The mower conditioner 80 may be self-propelled, in which case the header 82 may be coupled to the front of a vehicle having a cab 84. Alternatively, the mower conditioner 80 may be pulled, in which case the header 82 may be coupled to the rear of a tractor or other towing vehicle (not shown). In either case, the header 82 may be made to move over the ground G of a standing crop material 88, cut the crop material from the ground, condition the cut crop material 40 as it passes rearwardly through the header 82, and then return the conditioned crop material to the ground in the form of windrows or swathes 90 for drying and subsequent collection. In the example embodiment, the one or more sensors 38 and 50 may be configured to measure the actual geographical location of an actual amount of ash in the cut crop material 40, and to communicate this data to the memory device 46 and/or the processor 48 via the transceiver 44. In the example embodiment, the one or more sensors 50 may be located at or proximate to an exit of a cutting assembly 92 (broadly, a crop processing portion) and/or an entrance of a conditioning mechanism 94, or otherwise exposed to the cut crop material 40 within the header 82. According to an example not falling under the scope of the claims, the sensors 50 may employ substantially any suitable technology for measuring ash content, as described above, and including such sensors as near infrared (NIR) spectrometer, infrared thermal, or capacitance.

FIG. 4 is an example data table 400 or spreadsheet, including geolocation data and corresponding ash content data described above. In the exemplary embodiment, the data table 400 may include a plurality of columns and rows defining a plurality of cells. Each cell may include data or parameters associated ash content of a cut crop material. As depicted in FIG. 4, the plurality of columns may include, for example, the following data: a geolocation of a cut crop material, the ash content of the crop material, and a date measured. It is noted, however, that the data table 400 may include any number of columns and rows in the data table 400 based on other relevant cut crop material parameters.

The data contained in the data table 400 can then be displayed in multiple ways. For example, either through the data management system, such as a Geographic Information System (GIS) map, for future decision making, or as a text file type display. Either would be available to either export or display on other controller equipped agricultural machines, such as bale handling and loading equipment (not shown), to record or display all attributes of bales being fed or sold.

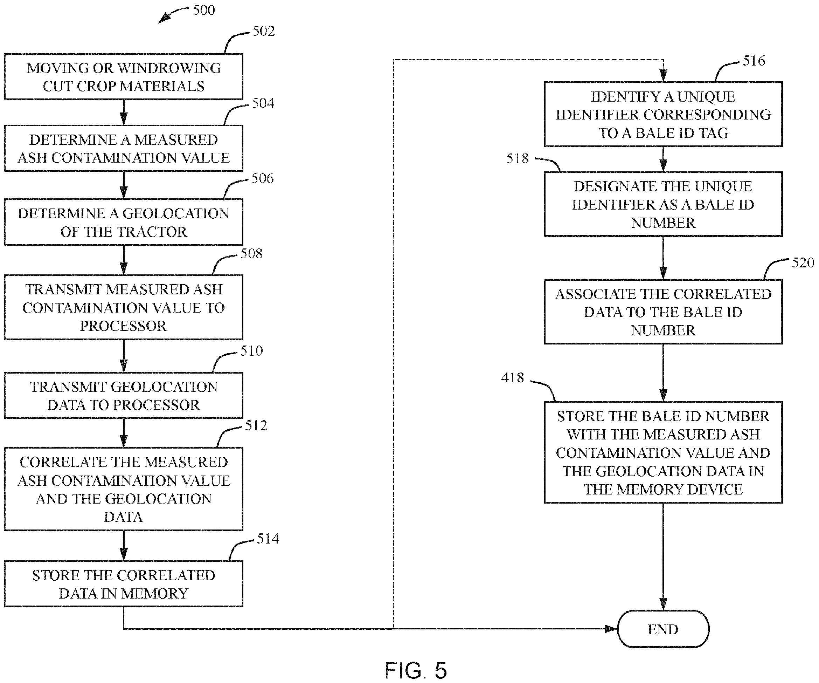

FIG. 5 depicts a flowchart illustrating an exemplary computer-implemented method 500 for correlating an amount of ash in a cut crop to a geolocation (an ash assessment process) using the ash assessment system 32 shown in FIGS. 1 and 3. The operations described herein may be performed in the order shown in FIG. 5 or, according to certain inventive aspects, may be performed in a different order. Furthermore, some operations may be performed concurrently as opposed to sequentially, and/or some operations may be optional, unless expressly stated otherwise or as may be readily understood by one of ordinary skill in the art.

The computer-implemented method 500 is described below, for ease of reference, as being executed by exemplary devices and components introduced with the embodiments illustrated in FIGS. 1-4. In one embodiment, the computer-implemented method 500 is implemented by the ash assessment system 32. In the exemplary embodiment, the computer-implemented method 500 relates to detecting an amount of ash in the air proximate a crop material 40 and/or an actual amount of ash in the crop material 40 being processed by a piece of agricultural equipment, such as the baler 10 (shown in FIG. 1), the mower conditioner 80 (shown in FIG. 3), and/or other agricultural equipment. While operations within the computer-implemented method 500 are described below regarding the ash assessment system 32, according to some aspects of the present invention, the computer-implemented method 500 may be implemented using any other computing devices and/or systems through the utilization of processors, transceivers, hardware, software, firmware, or combinations thereof. A person having ordinary skill will also appreciate that responsibility for all or some of such actions may be distributed differently among such devices or other computing devices without departing from the spirit of the present disclosure.

One or more computer-readable medium(s) may also be provided. The computer-readable medium(s) may include one or more executable programs stored thereon, wherein the program(s) instruct one or more processors or processing units to perform all or certain of the steps outlined herein. The program(s) stored on the computer-readable medium(s) may instruct the processor or processing units to perform additional, fewer, or alternative actions, including those discussed elsewhere herein.

Referring also to FIGS. 1 and 4, in operation, as the tractor 14 and baler 10 move over the ground G, the pickup 16 picks up the windrowed crop materials 40 lying thereon, as shown in operation 502. As the tines 36 of the rotary rake 34 rotate to pick up the crop materials 40, the tines may contact the ground G. The ground contact with the tines 36 causes soil and other materials to picked up along with the crop materials 40. This results in an increase in an amount of ash content of the crop materials 40. Generally, at least a portion of the crop materials 40 and ash are thrown into the air as the crop materials 40 are collected. Alternatively, as depicted in FIG. 3, the cutting assembly 92 of the header 82 may generate an amount of ash that falls on the cut crop material 40 during mowing/conditioning.

In operation 504, the one or more ash sensors 50 determine a measured ash contamination value indicative of an amount of ash particles associated with the cut organic material or crop material 40 being processed by the baler 10 and or the more conditioner 80. For example, as described herein, the one or more sensors 50 may be located proximate to an entrance of the pickup 16, and/or proximate the exit of the cutting assembly 92 of the header 82, or otherwise exposed to the cut crop material 40. The sensors 50 sample, in real-time, the air quality proximate the crop materials 40 and/or an actual amount of ash in the crop materials 40 during moving of the crop materials (e.g., processing, such as raking, baling, etc.), for example, by the rotary rake 34. The measured ash contamination value indicates an actual measured amount of ash particles proximate the cut crop material 40 being processed, for example, by the rake 34. In general, it may be preferable to determine the measured ash contamination value at or near the entrance of the pickup 16. The measured ash contamination value is indicative of an amount of ash that may collect on the crop materials 40.

Similarly, in operation 506, the one or more GNSS receivers 38 determine geolocation data corresponding to a geographical location of the GNSS receiver, and therefore, the agricultural implement. In the example, the geolocation data corresponds to a geolocation of the measured ash contamination value.

The airborne ash sensors 50 transmit one or more signals indicative of the measured ash contamination value to the processor 48, as shown in operation 508. Similarly, the GNSS receivers 38 transmit one or more signals indicative of the geolocation data to the processor 48, as shown in operation 510. The processor 48 receives the one or more measured ash contamination values and geolocation data via the transceiver 44. In operation 512, the processor correlates the measured ash contamination value and the geolocation data to one another. In operation 514, the processor stores the measured ash contamination value and the geolocation data in the memory device 46 that is coupled in communication with the processor 48. For example, the processor 48 populates a data table, such as the data table 200 and or 400 (shown in FIGS. 2 and 4, respectively) with the measured ash contamination value and the geolocation data.

In a preferred embodiment, the ash assessment process is repeated continuously during operation of the baler 10 and/or mower conditioner 80 in order to associate an ash content value to a geolocation of the crop materials 40 and/or bales 30. In some embodiments, the process may be repeated periodically based on time (e.g., at intervals of five (5) second, ten (10) seconds, thirty (30) seconds, one (1) minute, and the like). Alternatively, the process may be repeated periodically based on distance (e.g., at distance intervals of one (1) foot (0.3 m), five (5) feet (1.52 m), fifteen (15) feet (4.57 m), thirty (30) feet (9.14 m), one hundred (100) feet (30.48 m), and the like).

Optionally, at an operation 516, the processor identifies, with the tag reading module 72, a unique identifier corresponding to the bale ID tag 70 coupled to the completed bale 30. The processor 48 designates the unique identifier as a bale ID number of the completed bale 30 at operation 518. Furthermore, at operation 520, the processor 48 associates the correlated measured ash contamination value and geolocation data to the bale ID number and, at operation 522, stores the bale ID number with the measured ash contamination value and the geolocation data in the memory device 46. For example, the processor may populate a data table, such as the data table 200 (shown in FIG. 2) with the bale ID number, the measured ash contamination value, and the geolocation data.

Thus, it will be appreciated that embodiments of the present invention provide several advantages over the prior art, including making an objective (rather than a subjective) qualitative assessment of the amount of ash that may collect or collects on the crop materials; correlating the ash content to a geolocation of the crop materials in a field and/or a particular bale containing the crop materials; and periodically or continuously repeating the airborne ash assessment process.

### ADDITIONAL CONSIDERATIONS

In this description, references to "one embodiment," "an embodiment," or "embodiments" mean that the feature or features being referred to are included in at least one embodiment of the technology. Separate references to "one embodiment," "an embodiment," or "embodiments" in this description do not necessarily refer to the same embodiment and are also not mutually exclusive unless so stated and/or except as will be readily apparent to those skilled in the art from the description.

Although the present application sets forth a detailed description of numerous different embodiments, it should be understood that the legal scope of the description is defined by the words of the claims.

The detailed description is to be construed as exemplary only and does not describe every possible embodiment because describing every possible embodiment would be impractical. Numerous alternative embodiments may be implemented, using either current technology or technology developed after the filing date of this patent, which would still fall within the scope of the claims.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order recited or illustrated. Structures and functionality presented as separate components in example configurations may be implemented as a combined structure or component. Similarly, structures and functionality presented as a single component may be implemented as separate components. These and other variations, modifications, additions, and improvements fall within the scope of the subject matter herein. The foregoing statements in this paragraph shall apply unless so stated in the description and/or except as will be readily apparent to those skilled in the art from the description.

Certain embodiments are described herein as including logic or a number of routines, subroutines, applications, or instructions. These may constitute either software (e.g., code embodied on a machine-readable medium or in a transmission signal) or hardware. In hardware, the routines, etc., are tangible units capable of performing certain operations and may be configured or arranged in a certain manner. In example embodiments, one or more computer systems (e.g., a standalone, client or server computer system) or one or more hardware modules of a computer system (e.g., a processor or a group of processors) may be configured by software (e.g., an application or application portion) as computer hardware that operates to perform certain operations as described herein.

In various embodiments, computer hardware, such as a processor, may be implemented as special purpose or as general purpose. For example, the processor may comprise dedicated circuitry or logic that is permanently configured, such as an application-specific integrated circuit (ASIC), or indefinitely configured, such as a field-programmable gate array (FPGA), to perform certain operations. The processor may also comprise programmable logic or circuitry (e.g., as encompassed within a general-purpose processor or other programmable processor) that is temporarily configured by software to perform certain operations. It will be appreciated that the decision to implement the processor as special purpose, in dedicated and permanently configured circuitry, or as general purpose (e.g., configured by software) may be driven by cost and time considerations.

Accordingly, the term "processor" or equivalents should be understood to encompass a tangible entity, be that an entity that is physically constructed, permanently configured (e.g., hardwired), or temporarily configured (e.g., programmed) to operate in a certain manner or to perform certain operations described herein. Considering embodiments in which the processor is temporarily configured (e.g., programmed), each of the processors need not be configured or instantiated at any one instance in time. For example, where the processor comprises a general-purpose processor configured using software, the general-purpose processor may be configured as respective different processors at different times. Software may accordingly configure the processor to constitute a particular hardware configuration at one instance of time and to constitute a different hardware configuration at a different instance of time.

Computer hardware components, such as transceiver elements, memory elements, processors, and the like, may provide information to, and receive information from, other computer hardware components. Accordingly, the described computer hardware components may be regarded as being communicatively coupled. Where multiple of such computer hardware components exist contemporaneously, communications may be achieved through signal transmission (e.g., over appropriate circuits and buses) that connect the computer hardware components. In embodiments in which multiple computer hardware components are configured or instantiated at different times, communications between such computer hardware components may be achieved, for example, through the storage and retrieval of information in memory structures to which the multiple computer hardware components have access. For example, one computer hardware component may perform an operation and store the output of that operation in a memory device to which it is communicatively coupled. A further computer hardware component may then, at a later time, access the memory device to retrieve and process the stored output. Computer hardware components may also initiate communications with input or output devices, and may operate on a resource (e.g., a collection of information).

The various operations of example methods described herein may be performed, at least partially, by one or more processors that are temporarily configured (e.g., by software) or permanently configured to perform the relevant operations. Whether temporarily or permanently configured, such processors may constitute processor-implemented modules that operate to perform one or more operations or functions. The modules referred to herein may, in some example embodiments, comprise processor-implemented modules.

Similarly, the methods or routines described herein may be at least partially processor implemented. For example, at least some of the operations of a method may be performed by one or more processors or processor-implemented hardware modules. The performance of certain of the operations may be distributed among the one or more processors, not only residing within a single machine, but deployed across a number of machines. In some example embodiments, the processors may be located in a single location (e.g., within a home environment, an office environment or as a server farm), while in other embodiments the processors may be distributed across a number of locations.

Unless specifically stated otherwise, discussions herein using words such as "processing," "computing," "calculating," "determining," "presenting," "displaying," or the like may refer to actions or processes of a machine (e.g., a computer with a processor and other computer hardware components) that manipulates or transforms data represented as physical (e.g., electronic, magnetic, or optical) quantities within one or more memories (e.g., volatile memory, non-volatile memory, or a combination thereof), registers, or other machine components that receive, store, transmit, or display information.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus.

## Claims

1. A system comprising:
an agricultural implement (10) comprising a crop processing portion (34), said crop processing portion being configured to move a cut organic material (40) in a field; and
an ash assessment system comprising:
a GNSS receiver (38) configured to determine geolocation data corresponding to a geographical location of the GNSS receiver (38);
an ash sensor (50) configured to determine a measured ash contamination value indicative of an amount of ash particles associated with the cut organic material; and
a processor (48) operatively coupled to said GNSS receiver (38) and said ash sensor (50), said processor (48) programmed to perform an ash assessment process, wherein said processor is programmed to:
receive the measured ash contamination value from the ash sensor (50);
receive the geolocation data from the GNSS receiver (38), the geolocation data corresponding to a geolocation of the measured ash contamination value;
correlate the measured ash contamination value and the geolocation data to one another; and
store the measured ash contamination value and the geolocation data in a memory device (46) that is coupled in communication with said processor
**characterized in that** said ash sensor (50) comprises an optical particle counter configured to detect an amount and size of particulate matter in the air.

2. The system in accordance with claim 1 further comprising a tow vehicle (14) configured to tow the agricultural implement (10),
said processor (48) programmed to transmit in real-time the measured ash contamination value and the geolocation data to the tow vehicle (14).

3. The system in accordance with claim 2 wherein
said processor (48) is further programmed to
identify, with a tag reading module (72), a unique identifier corresponding to a bale identification tag (70) coupled to a completed bale (30);
designate the unique identifier as a bale ID number of the completed bale (30);
associate the correlated measured ash contamination value and geolocation data to the bale ID number; and
store the bale ID number with the measured ash contamination value and the geolocation data in the memory device (46).

4. The system in accordance with claim 3, said processor (48) further programmed to populate a data table (200) with the bale ID number, the measured ash contamination value, and the geolocation data when storing the measured ash contamination value and the geolocation data in the memory device (46).

5. The system in accordance with claim 1, said processor (48) further programmed to populate a data table (200) with the measured ash contamination value and the geolocation data when storing the measured ash contamination value and the geolocation data in the memory device (46).

6. The system in accordance with claim 1, wherein the ash sensor (50) is located at an exit of the crop processing portion.

7. The system in accordance with claim 1,
said processor (48) being programmed to repeat the ash assessment process periodically during operation of the agricultural implement (10).

8. The system in accordance with claim 1,
said processor (48) being programmed to perform the ash assessment process continuously during operation of the agricultural implement (10).

9. The system in accordance with claim 1,
said ash sensor (50) being coupled to said agricultural (10) implement proximate an entrance of said crop processing portion.

10. The system in accordance with claim 1,
said ash sensor (50) comprising one or more of the following: a photometer, a light scattering airborne particle counter, a light blocking airborne particle counter, a direct imaging counter, and a laser induced fluorescence particle counter.

11. The system in accordance with claim 1,
said ash sensor (50) comprising a sensor configured to differentiate between inorganic and organic airborne particles.

12. An ash assessment method for performing an ash assessment process comprising:
moving a cut organic material (40) lying in a field with a crop processing portion of an agricultural implement (10);
determining a measured ash contamination value indicative of an amount of ash particles associated with the cut organic material;
determining geolocation data corresponding to a geographical location of the agricultural implement (10);
receiving the measured ash contamination value from an ash sensor (50) coupled to the agricultural implement (10);
receiving the geolocation data from a GNSS receiver (38) coupled to the agricultural implement (10), the geolocation data corresponding to a geolocation of the measured ash contamination value;
correlating the measured ash contamination value and the geolocation data to one another; and
storing the measured ash contamination value and the geolocation data in a memory device (46),
**characterized in that** the ash sensor (50) comprises an optical particle counter configured to detect an amount and size of particulate matter in the air.

13. The method in accordance with claim 12 further comprising:
transmitting in real-time the measured ash contamination value and the geolocation data to a display (56) in a tow vehicle (14) for viewing by an operator, the tow vehicle (14) being coupled to the agricultural implement (11).

14. The method in accordance with claim 13 further comprising:
Identifying, with a tag reading module (72), a unique identifier corresponding to a bale identification tag (70) coupled to a completed bale (30);
designating the unique identifier as a bale ID number of the completed bale (30);
associating the correlated measured ash contamination value and geolocation data to the bale ID number; and
storing the bale ID number with the measured ash contamination value and the geolocation data in the memory device (46).

## Patentansprüche

1. System mit:
einem landwirtschaftlichen Gerät (10) mit einem Erntegutverarbeitungsbereich (34), wobei der Erntegutverarbeitungsbereich konfiguriert ist, um ein abgeschnittenes organisches Material (40) auf einem Feld zu bewegen; und
einem Ascheprüfsystem mit:
einem GNSS-Empfänger (38), der konfiguriert ist, um Geolokalisationsdaten zu bestimmen, die einem geografischen Ort des GNSS-Empfängers (38) entsprechen;
einem Aschesensor (50), der konfiguriert ist, um einen gemessenen Aschekontaminationswert zu bestimmen, der eine Menge von Ascheteilchen anzeigt, welche mit dem abgeschnittenen organischen Material verbunden sind; und
einem Prozessor (48), der betrieblich an den GNSS-Empfänger (38) und den Aschesensor (50) angeschlossen ist, wobei der Sensor (48) programmiert ist, um einen Ascheprüfprozess durchzuführen, wobei der Prozessor programmiert ist, um:
den gemessenen Aschekontaminationswert von dem Aschesensor (50) zu empfangen;
die Geolokalisationsdaten von dem GNSS-Empfänger (38) zu empfangen, wobei die Geolokalisationsdaten einer Geolokalisation des gemessenen Aschekontaminationswerts entsprechen;
den gemessenen Aschekontaminationswert und die Geolokalisationsdaten miteinander zu korrelieren; und
den gemessenen Aschekontaminationswert und die Geolokalisationsdaten in einer Speichereinrichtung zu speichern, die kommunikationsweise mit dem Prozessor gekoppelt ist,
**dadurch gekennzeichnet, dass** der Aschesensor (50) einen optischen Teilchenzähler aufweist, der konfiguriert ist, um eine Menge und eine Größe von Teilchenmaterial in der Luft zu detektieren.

2. System nach Anspruch 1, weiterhin mit einem Zugfahrzeug (14), das konfiguriert ist, um das landwirtschaftliche Gerät (10) zu ziehen,
wobei der Prozessor (48) programmiert ist, um den gemessenen Aschekontaminationswert und die Geolokalisationsdaten in Echtzeit an das Zugfahrzeug (14) zu übermitteln.

3. System nach Anspruch 2, wobei der Prozessor (48) weiterhin programmiert ist, um:
mit einem Tag-Lesemodul (72) einen eindeutigen Kennzeichner zu identifizieren, der einem Ballenidentifikations-Tag (70) entspricht, das an einen fertiggestellten Ballen (30) gekoppelt ist;
den eindeutigen Kennzeichner als eine Ballenidentifikationsnummer des fertiggestellten Ballens (30) zu bezeichnen;
den korrelierten gemessenen Aschekontaminationswert und die korrelierten Geolokalisationsdaten mit der Ballenidentifikationsnummer zu verknüpfen; und
die Ballenidentifikationsnummer zusammen mit dem gemessenen Aschekontaminationswert und den Geolokalisationsdaten in der Speichereinrichtung (46) zu speichern.

4. System nach Anspruch 3, wobei der Prozessor (48) weiterhin programmiert ist, um eine Datentabelle (200) mit der Ballenidentifikationsnummer, dem gemessenen Aschekontaminationswert und den Geolokalisationsdaten zu besetzen, wenn er den gemessenen Aschekontaminationswert und die Geolokalisationsdaten in der Speichereinrichtung (46) speichert.

5. System nach Anspruch 1, wobei der Prozessor (48) weiterhin programmiert ist, um eine Datentabelle (200) mit den gemessenen Aschekontaminationswert und den Geolokalisationsdaten zu besetzen, wenn er den gemessenen Aschekontaminationswert und die Geolokalisationsdaten in der Speichereinrichtung (46) speichert.

6. System nach Anspruch 1, wobei der Aschesensor (50) an einem Ausgang des Erntegutverarbeitungsbereichs angeordnet ist.

7. System nach Anspruch 1, wobei der Prozessor (48) programmiert ist, um den Ascheprüfprozess während des Betriebs des landwirtschaftlichen Geräts (10) periodisch zu wiederholen.

8. System nach Anspruch 1, wobei der Prozessor (48) programmiert ist, um den Ascheprüfprozess während des Betriebs des landwirtschaftlichen Geräts (10) kontinuierlich durchzuführen.

9. System nach Anspruch 1, wobei der Aschesensor (50) nahe einem Eingang des Erntegutverarbeitungsbereichs an das landwirtschaftliche Gerät (10) gekoppelt ist.

10. System nach Anspruch 1, wobei der Aschesensor (50) ein Photometer und/oder einen lichtstreuenden Schwebeteilchenzähler und/oder einen lichtblockierenden Schwebeteilchenzähler und/oder einen direkt abbildenden Zähler und/oder einen Laser-induzierte-Fluoreszenz-Teilchenzähler.

11. System nach Anspruch 1, wobei der Aschesensor (50) einen Sensor aufweist, der konfiguriert ist, um zwischen anorganischen und organischen Schwebeteilchen zu unterscheiden.

12. Ascheprüfverfahren zum Durchführen eines Ascheprüfprozesses mit:
Bewegen von abgeschnittenem organischem Material (40), das auf einem Feld liegt, mit einem Erntegutverarbeitungsbereich eines landwirtschaftlichen Geräts (10);
Bestimmen eines gemessenen Aschekontaminationswerts, der eine Menge von Aschepartikeln anzeigt, die mit dem organischen Material verbunden sind;
Bestimmen von Geolokalisationsdaten, die einem geografischen Ort des landwirtschaftlichen Geräts (10) entsprechen;
Empfangen des Aschekontaminationswerts von einem Aschesensor (50), der an das landwirtschaftliche Gerät (10) angekoppelt ist;
Empfangen der Geolokalisationsdaten von einem GNSS-Empfänger (38), der an das landwirtschaftliche Gerät (10) angekoppelt ist, wobei die Geolokalisationsdaten einer Geolokalisation des gemessenen Aschekontaminationswerts entsprechen;
miteinander Korrelieren des gemessenen Aschekontaminationswerts und der Geolokalisationsdaten; und
Speichern des gemessenen Aschekontaminationswerts und der Geolokalisationsdaten in einer Speichereinrichtung (46),
**dadurch gekennzeichnet, dass** der Aschesensor (50) einen optischen Teilchenzähler aufweist, der konfiguriert ist, um eine Menge und eine Größe von Teilchenmaterial in der Luft zu detektieren.

13. Verfahren nach Anspruch 12, weiterhin mit:
in Echtzeit Übertragen des gemessenen Aschekontaminationswerts und der Geolokalisationsdaten an eine Anzeige (56) in einem Zugfahrzeug (14) zur Betrachtung durch einen Bediener, wobei das Zugfahrzeug (14) an das landwirtschaftliche Gerät (11) angekoppelt ist.

14. Verfahren nach Anspruch 13, weiterhin mit:
Identifizieren eines eindeutigen Kennzeichners, der einem Ballenidentifikations-Tag (70) gekoppelt an einen vervollständigten Ballen (30) entspricht, mittels eines Tag-Lesemoduls (72);
Bezeichnen des eindeutigen Kennzeichners als Ballenidentifikationsnummer des vervollständigten Ballens (30);
Verbinden des korrelierten gemessenen Aschekontaminationswerts und der korrelierten Geolokalisationsdaten mit der Ballenidentifikationsnummer; und
Speichern der Ballenidentifikationsnummer zusammen mit dem gemessenen Aschekontaminationswert und den Geolokalisationsdaten in der Speichereinrichtung (46).

## Revendications

1. Dispositif comprenant :
un outillage agricole (10) comprenant une partie de traitement de récolte (34), ladite partie de traitement de récolte étant configurée de manière à déplacer un matériau organique coupé (40) dans un champ ; et
un dispositif d'évaluation de cendres comprenant :
un récepteur de navigation par satellite GNSS (38) configuré de manière à déterminer des données de géolocalisation correspondant à une position géographique du récepteur GNSS (38) ;
un capteur de cendres (50) configuré de manière à déterminer une valeur de contamination par cendres mesurée représentative d'une quantité de particules de cendres associées au matériau organique coupé ; et
une unité de traitement (48) couplée de manière opérationnelle audit récepteur GNSS (38) et audit capteur de cendres (50), ladite unité de traitement (48) étant programmée de manière à exécuter une opération d'évaluation de cendres, dans lequel ladite unité de traitement est programmée de manière à :
recevoir la valeur de contamination par cendres mesurée à partir du capteur de cendres (50) ;
recevoir les données de géolocalisation à partir du récepteur GNSS (38), les données de géolocalisation correspondant à une géolocalisation de la valeur de contamination par cendres mesurée ;
corréler la valeur de contamination par cendres mesurée et les données de géolocalisation les unes avec les autres ; et
mémoriser la valeur de contamination par cendres mesurée et les données de géolocalisation dans un dispositif de mémorisation (46) qui est couplé en communication avec ladite unité de traitement,
**caractérisé en ce que** ledit capteur de cendres (50) comprend un compteur de particules optique configuré de manière à détecter une quantité et une taille de matière particulaire dans l'air.

2. Dispositif selon la revendication 1 comprenant, en outre, un véhicule de remorquage (14) configuré de manière à remorquer l'outillage agricole (10),
ladite unité de traitement (48) étant programmée afin de transmettre en temps réel la valeur de contamination par cendres mesurée et les données de géolocalisation au véhicule de remorquage (14).

3. Dispositif selon la revendication 2, dans lequel ladite unité de traitement (48) est, en outre, programmée de manière à :
identifier, avec un module de lecture d'étiquette (72), un identificateur unique correspondant à une étiquette d'identification de balle (70) couplée à une balle achevée (30) ;
désigner l'identificateur unique en tant que numéro d'identification de balle de la balle achevée (30) ;
associer la valeur de contamination par cendres mesurée et les données de géolocalisation corrélées au numéro d'identification de balle ; et
mémoriser le numéro d'identification de balle avec la valeur de contamination par cendres mesurée et les données de géolocalisation dans le dispositif de mémorisation (46).

4. Dispositif selon la revendication 3, ladite unité de traitement (48) étant, en outre, programmée de manière à remplir une table de données (200) avec le numéro d'identification de balle, la valeur de contamination par cendres mesurée et les données de géolocalisation lors de la mémorisation de la valeur de contamination par cendres mesurée et des données de géolocalisation dans le dispositif de mémorisation (46).

5. Dispositif selon la revendication 1, ladite unité de traitement (48) étant, en outre, programmée de manière à remplir une table de données (200) avec la valeur de contamination par cendres mesurée et les données de géolocalisation lors de la mémorisation de la valeur de contamination par cendres mesurée et des données de géolocalisation dans le dispositif de mémorisation (46).

6. Dispositif selon la revendication 1, dans lequel le capteur de cendres (50) est situé au niveau d'une sortie de la partie de traitement de récolte.

7. Dispositif selon la revendication 1,
ladite unité de traitement (48) étant programmée de manière à répéter l'opération d'évaluation de cendres de manière périodique au cours du fonctionnement de l'outillage agricole (10).

8. Dispositif selon la revendication 1,
ladite unité de traitement (48) étant programmé de manière à exécuter en continu l'opération d'évaluation de cendres au cours du fonctionnement de l'outillage agricole (10).

9. Dispositif selon la revendication 1,
ledit capteur de cendres (50) étant couplé audit outillage agricole (10) à proximité d'une entrée de ladite partie de traitement de récolte.

10. Dispositif selon la revendication 1,
ledit capteur de cendres (50) comprenant un ou plusieurs parmi les suivants : un photomètre, un compteur de particules en suspension dans l'atmosphère par dispersion lumineuse, un compteur de particules en suspension dans l'atmosphère par blocage de lumière, un compteur de formation d'image direct et un compteur de particules par fluorescence induite par laser.

11. Dispositif selon la revendication 1,
ledit capteur de cendres (50) comprenant un capteur configuré de manière à différencier les particules inorganiques et organiques en suspension dans l'atmosphère.

12. Procédé d'évaluation de cendres destiné à exécuter une opération d'évaluation de cendres comprenant :
le déplacement d'un matériau organique coupé (40) reposant dans un champ avec une partie de traitement de récolte d'un outillage agricole (10) ;
la détermination d'une valeur de contamination par cendres mesurée représentative d'une quantité de particules de cendres associées au matériau organique coupé ;
la détermination de données de géolocalisation correspondant à une position géographique de l'outillage agricole (10) ;
la réception de la valeur de contamination par cendres mesurée à partir d'un capteur de cendres (50) couplé à l'outillage agricole (10) ;
la réception des données de géolocalisation à partir d'un récepteur GNSS (38) couplé à l'outillage agricole (10), les données de géolocalisation correspondant à une géolocalisation de la valeur de contamination par cendres mesurée ;
la corrélation de la valeur de contamination par cendres mesurée et des données de géolocalisation les unes par rapport aux autres ;
et la mémorisation de la valeur de contamination par cendres mesurée et des données de géolocalisation dans un dispositif de mémorisation (46),
**caractérisé en ce que** le capteur de cendres (50) comprend un compteur de particules optique configuré de manière à détecter une quantité et une taille de matière particulaire dans l'air.

13. Procédé selon la revendication 12, comprenant, en outre :
la transmission en temps réel de la valeur de contamination par cendres mesurée et des données de géolocalisation à un dispositif d'affichage (56) sur un véhicule de remorquage (14) afin d'assurer la visualisation par un opérateur, le véhicule de remorquage (14) étant couplé à l'outillage agricole (11).

14. Procédé selon la revendication 13, comprenant, en outre :
l'identification, avec un module de lecture d'étiquette (72), d'un identificateur unique correspondant à une étiquette d'identification de balle (70) couplée à une balle achevée (30) ;
la désignation de l'identificateur unique en tant que numéro d'identification de balle de la balle achevée (30) ;
l'association de la valeur de contamination par cendres mesurée et des données de géolocalisation corrélées au numéro d'identification de balle ; et
la mémorisation du numéro d'identification de balle avec la valeur de contamination par cendres mesurée et des données de géolocalisation dans le dispositif de mémorisation (46).
